# EUROPEAN PATENT SPECIFICATION

(11) **EP 1 945 692 B1**
(45) Date of publication and mention of the grant of the patent: **22.09.2010**
(21) Application number: 06816458.1
(22) Date of filing: 06.10.2006
(51) Int. Cl.: C08G 69/26, C08G 69/36, B32B 1/08, B32B 27/34, F16L 11/04, F16L 9/12

(54) **MARINE UMBILICAL COMPRISING HYDROLYSIS RESISTANT POLYAMIDES**
UNTERWASSERVERSORGUNGSLEITUNG AUS HYDROLYSEBESTÄNDIGEN POLYAMIDEN
OMBILICAL MARIN CONTENANT DES POLYAMIDES RESISTANT L'HYDROLYSE

(30) Priority: 06.10.2005 US 724122 P
(43) Date of publication of application: 23.07.2008
(73) Proprietor: E.I. DU PONT DE NEMOURS AND COMPANY, Wilmington, DE 19898 (US)
(72) Inventor: FISH, Robert, B., Jr., Parkersburg, West Virginia 25101 (US); MARTENS, Marvin, M., Vienna, West Virginia 26104 (US); MESTEMACHER, Steven, A., Parkersburg, West Virginia 26104 (US); PAGILAGAN, Rolando, Umali, Parkersburg, West Virginia 26104 (US)
(74) Representative: Morf, Jan Stefan
(86) International application number: PCT/US2006/039240
(87) International publication number: WO 2007/041723

(56) References cited:
- EP-A- 0 411 791
- EP-A1- 0 505 162
- US-B1- 6 217 962

## Description

### Field of the Invention

The present invention relates to marine umbilicals comprising hydrolysis resistant polyamide compositions that may optionally comprise plasticizer.

### Background of the Invention

Marine umbilicals are used to transport materials and information between a control or processing facility such as a platform, surface vessel, or land-based installation, and an undersea oil wellhead. The umbilicals comprise a plurality of inner tubes encased in an outer casing. The inner tubes may independently convey materials such as hydraulic fluids, organic solvents such as methanol, corrosion inhibitors, hot water, etc. from the surface to the wellhead. The solvents and hot water may be used to remove asphaltines, waxes, tars, and other contaminants accumulated on the walls of well pipes. Other inner tubes may provide a conduit for communication cables such electrical and electronic cables or fiber optic cables.

Umbilicals often comprise internal steel tubes encased in an outer polymeric pipe, where the steel tubes are used to convey chemicals such as hydraulic fluids, organic solvents, hot water, and the like. Although steel can be resistant to the chemicals and any elevated pressures used, it can have the disadvantages of high cost, high weight, and poor flexibility and fatigue strength. Flexibility and fatigue strength are particularly important in applications where the umbilical is subjected to stresses caused by ocean currents, waves, transportation, and the like.

Because they have good chemical resistance, good physical properties, light weight, and can be conveniently formed into tubular structures with a variety of cross sections and incorporated into multilayered structures, polyamides are often a desirable material to use for pipes and tubes. However, many marine umbilical applications require that the inner tubes be exposed to nucleophiles such as water and alcohols at elevated temperatures. Under such conditions, the amide bonds of many polyamides may be susceptible to hydrolysis and the rate of hydrolysis increases with temperature. Hydrolysis of the amide bonds can cause a reduction in molecular weight and concomitant loss in physical properties that can result in failure of the pipe during use. Such a failure can be catastrophic, with the loss of fluid causing undesirable consequences ranging from the impairment of the performance of other components present in the umbilical, to contact of the fluid with the external environment if the outer pipe fails.

Aliphatic polyamides such as polyamide 6,12 or polyamide 11 have been used to make pipes and tubing, but many applications require greater hydrolysis resistance than can be obtained from currently available polyamides.

It would be desirable to obtain a marine umbilical inner tube component comprising a polyamide composition that has both improved hydrolysis resistance and can be conveniently plasticized to give it the flexibility needed to be useful in many applications. U.S. patent 6,538,198 discloses a marine umbilical including tubes having an inner polymer sleeve and an outer sleeve of carbon fibers in an epoxy matrix positioned around the inner sleeve.

### Summary of the Invention

There is disclosed and claimed herein marine umbilicals comprising at least one polyamide inner tube and an outer casing surrounding the least one polyamide inner tube, wherein the at least one polyamide inner tube comprises a polyamide composition comprising a polyamide comprising;
(a) repeat units derived from monomers selected from one or more of the group consisting of:
   (i) at least one aromatic dicarboxylic acid having 8 to 20 carbon atoms and/or at least one alicyclic dicarboxylic acid having 8 to 20 carbon atoms and at least one aliphatic diamine having 4 to 20 carbon atoms, and
   (ii) at least one aromatic diamine having 6 to 20 carbon atoms and/or at least one alicyclic diamine having 6 to 20 carbon atoms and at least one aliphatic dicarboxylic acid having 4 to 20 carbon atoms; and
(b) repeat units derived from monomers selected from one or more of the group consisting of:
   (iii) at least one aliphatic dicarboxylic acid having 6 to 36 carbon atoms and at least one aliphatic diamine having 4 to 20 carbon atoms, and
   (iv) at least one lactam and/or aminocarboxylic acid having 4 to 20 carbon atoms;
wherein the copolyamide has a melting point that is less than or equal to about 240 °C, at least about 30 µeq/g of amine ends, and an inherent viscosity of at least about 1.2 as measured in *m*-cresol. The polyamide composition may optionally further comprise plasticizer.

### Brief Description of the Drawings

Figure 1 is a cross-sectional view of an exemplary umbilical of the present invention.
Figure 2 is a cross-sectional view of an exemplary umbilical of the present invention.

### Detailed Description of the Invention

There are a number of terms used throughout the specification for which the following will be of assistance in understanding their scope and meaning. As used herein and as will be understood by those skilled in the art, the terms "terephthalic acid," "isophthalic acid," and "dicarboxylic acid/dioic acid" refer also to the corresponding carboxylic acid derivatives of these materials, which can include carboxylic acid esters, diesters, and acid chlorides. Moreover and as used herein, and as will be understood by one skilled in the art, the term "hydrolysis resistant" in conjunction with a polyamide refers to the ability of the polyamide to retain its molecular weight upon exposure to water.

As is illustrated in Figures 1 and 2, the marine umbilical **10** of the present invention comprises one or more inner tubes **11** comprising the polyamide composition described in detail below, wherein inner tubes **11** are surrounded by an outer casing **12.** The inner tube **11** may comprise a single layer **13** or multiple concentric layers **14.** When multiple layers are present, at least one layer comprises the polyamide composition described below, while layers may comprise other polymeric materials, metals, or other materials. The marine umbilical **10** may optionally further comprise additional inner tubes **15** separately comprising other materials, including other polymeric materials and metals such as steel. Other polymeric materials may include polyamides such as polyamide 11; polyamide 12; polyamide 6,12; and polyamide 6,10 or other polymeric materials such as polyethylene or polypropylene. The additional inner tubes **15** may be single layered or multilayered. Outer casing **12** may be made from any suitable material. Preferred materials include thermoplastic elastomers. Inner tubes **11,** optionally **15,** and casing **12** may be in physical contact with one another or there may be spaces present between one or more of them.

Tubes **11** and **15** and casing **12** may have a circular or roughly circular (e.g. oval) cross-section. However more generally they may be shaped into seemingly limitless geometries so long as they define a passageway therethrough. For example suitable shapes may include polygonal shapes and may even incorporate more that one shape along the length thereof. Tubes 11 and 15 and casing 12 may have a variety of wall thicknesses and (in the event that they are circular in cross section) diameters.

The inner tube 11 of the umbilical of the present invention comprises a polyamide composition comprising a polyamide comprising repeat units (a) that are derived from monomers selected from the group consisting of (i) at least one aromatic dicarboxylic acid having 8 to 20 carbon atoms and/or at least one alicyclic dicarboxylic acid having 8 to 20 carbon atoms and at least one aliphatic diamine having 4 to 20 carbon atoms, and (ii) at least one aromatic diamine having 6 to 20 carbon atoms and/or at least alicyclic diamine having 6 to 20 carbon atoms and at least one aliphatic dicarboxylic acid having 4 to 20 carbon atoms. The copolyamide further comprises repeat units (b) that are derived from monomers selected from one or more of the group consisting of (i) at least one aliphatic dicarboxylic acids having 6 to 36 carbon atoms and at least one aliphatic diamines having 4 to 20 carbon atoms, and (ii) at least one lactam and/or aminocarboxylic acids having 4 to 20 carbon atoms.

By "aromatic dicarboxylic acid" is meant dicarboxylic acids in which each carboxyl group is directly bonded to an aromatic ring. Examples of suitable aromatic dicarboxylic acids include terephthalic acid; isophthalic acid; 1,5-naphthalenedicarboxylic acid; 2,6-naphthalenedicarboxylic acid; and 2,7-naphthalenedicarboxylic acid. Terephthalic acid and isophthalic acid are preferred. By "alicyclic dicarboxylic acid" is meant dicarboxylic acids containing a saturated hydrocarbon ring, such as a cyclohexane ring. The carboxyl group is preferably directly bonded to the saturated hydrocarbon ring. An example of a suitable alicyclic dicarboxylic acid includes 1,4-cydohexanedicarboylic acid.

By "aromatic diamine" is meant diamines containing an aromatic ring. An example of a suitable aromatic diamine is *m*-xylylenediamine. By "alicyclic diamine" is meant diamines containing a saturated hydrocarbon ring. Examples of suitable alicyclic diamines include 1-amino-3-aminomethyl-3,5,5,-trimethylcyclohexane; 1,4-bis(aminomethyl)cyclohexane; and bis(*p-*aminocyclohexyl)methane. Any of the stereoisomers of the alicyclic diamines may be used.

Examples of aliphatic dicarboxylic acids having 6 to 36 carbon atoms include adipic acid, nonanedioic acid, decanedioic acid (also known as sebacic acid), undecanedioic acid, dodecanedioic acid, tridecanedioic acid, and tetradecanedioic acid. The aliphatic diamines having 4 to 20 carbon atoms may be linear or branched. Examples of preferred diamines include hexamethylenediamine, 2-methylpentamethylenediamine; 1,8-diaminooctane; methyl-1,8-diaminooctane; 1,9-diaminononane; 1,10-diarninodecane; and 1,12-diaminedodecane. Examples of lactams include caprolactam and laurolactam. An example of an aminocarboxylic acid includes aminodecanoic acid.

Preferred copolyamides are semiaromatic copolyamides. The copolyamides preferably comprise repeat units (a) that are derived from terephthalic acid and/or isophthalic acid and hexamethylenediamine and repeats units (b) that are derived from one or more of nonanedioic acid and hexamethylenediamine; decanedioic acid and hexamethylenediamine; undecanedioic acid and hexamethylenediamine; dodecanedioic acid and hexamethylenediamine; tridecanedioic acid and hexamethylenediamine; tetradecanedioic acid and hexamethylenediamine; caprolactam; laurolactam; and 11-aminoundecanoic acid.

A preferred copolyamide comprises repeat units (a) that are derived from terephthalic acid and hexamethylenediamine and repeat units (b) that are derived from decanedioic acid and/or dodecanedioic acid and hexamethylenediamine.

The copolyamide has at least about 30 µeq/g of amine ends, or preferably at least about 40, or more preferably at least about 50, or yet more preferably at least about 60 µeq/g of amine ends. Amine ends may be determined by titrating a 2 percent solution of polyamide in a phenol/methanol/water mixture (50:25:25 by volume) with 0.1 N hydrochloric acid. The end point may be determined potentiometrically or conductometrically. (See Kohan, M.I. Ed. Nylon Plastics Handbook, Hanser: Munich, 1995; p. 79 and Waltz, J.E.; Taylor, G.B. Anal. Chem. 1947 19, 448-50.)

The copolyamide has an inherent viscosity of at least about 1.2 as measured in *m*-cresol following ASTM D5225.

The copolyamide has melting point of less than or equal to about 240 °C, or preferably less than or equal to about 230 °C, or yet more preferably less than or equal to about 220 °C. By "melting point" is meant the second melting point of the polymer as measured according to ISO 11357 and ASTM D3418.

The copolyamide of the present invention may be prepared by any means known to those skilled in the art, such as in an batch process using, for example, an autoclave or using a continuous process. See, for example, Kohan, M.I. Ed. Nylon Plastics Handbook, Hanser: Munich, 1995; pp. 13-32. Additives such as lubricants, antifoaming agents, and end-capping agents may be added to the polymerisation mixture.

The polyamide composition used in the present invention may comprise the copolyamide alone or may optionally comprise additives. A preferred additive is at least one plasticizer. The plasticizer will preferably be miscible with the polyamide. Examples of suitable plasticizers include sulfonamides, preferably aromatic sulfonamides such as benzenesulfonamides and toluenesulfonamides. Examples of suitable sulfonamides include *N*-alkyl benzenesulfonamides and toluenesufonamides, such as *N*-butylbenzenesulfonamide, *N*-(2-hydroxypropyl)benzenesulfonamide, *N*-ethyl-o-toluenesulfonamide, *N*-ethyl-*p-*toluenesulfonamide, o-toluenesulfonamide, *p*-toluenesulfonamide, and the like. Preferred are *N*-butylbenzenesulfonamide, *N*-ethyl-o-toluenesulfonamide, and *N-*ethyl-*p*-toluenesulfonamide.

The plasticizer may be incorporated into the composition by melt-blending the polymer with plasticizer and, optionally, other ingredients, or during polymerization. If the plasticizer is incorporated during polymerization, the polyamide monomers are blended with one or more plasticizers prior to starting the polymerization cycle and the blend is introduced to the polymerization reactor. Alternatively, the plasticizer can be added to the reactor during the polymerization cycle.

When used, the plasticizer will be present in the composition in about 1 to about 20 weight percent, or more preferably in about 6 to about 18 weight percent, or yet more preferably in about 8 to about 15 weight percent, wherein the weight percentages are based on the total weight of the composition.

The polyamide composition used in the present invention may optionally comprise additional additives such as impact modifiers; thermal, oxidative, and/or light stabilizers; colorants; lubricants; mold release agents; and the like. Such additives can be added in conventional amounts according to the desired properties of the resulting material, and the control of these amounts versus the desired properties is within the knowledge of the skilled artisan.

When present, additives may be incorporated into the polyamide composition used in the present invention by melt-blending using any known methods. The component materials may be mixed to homogeneity using a melt-mixer such as a single or twin-screw extruder, blender, kneader, Banbury mixer, etc. to give a polyamide composition. Or, part of the materials may be mixed in a melt-mixer, and the rest of the materials may then be added and further melt-mixed until homogeneous.

The inner tube 11 of the present invention may be formed by any method known to those skilled in the art, such as extrusion. When tube 11 comprises multiple layers, the polyamide composition used in the present invention may be extruded over one or more additional layers, including polymeric and metal layers. Alternatively, additional layers may be added to a tube comprising at least one layer comprising the polyamide used in the present invention by any method known in the art, such as extrusion or wrapping. The marine umbilical of the present invention is formed by any suitable method known in the art.

## Claims

1. A marine umbilical comprising at least one polyamide inner tube and an outer casing surrounding the least one polyamide inner tube, wherein the at least one polyamide inner tube comprises a polyamide composition comprising a copolyamides comprising:
(a) repeat units derived from monomers selected from one or more of the group consisting of:
(i) at least one aromatic dicarboxylic acid having 8 to 20 carbon atoms and/or at least one alicyclic dicarboxylic acid having 8 to 20 carbon atoms and at least one aliphatic diamine having 4 to 20 carbon atoms, and
(ii) at least one aromatic diamine having 6 to 20 carbon atoms and/or at least one alicyclic diamine having 6 to 20 carbon atoms and at least one aliphatic dicarboxylic acid having 4 to 20 carbon atoms; and
(b) repeat units derived from monomers selected from one or more of the group consisting of:
(iii) at least one aliphatic dicarboxylic acid having 6 to 36 carbon atoms and at least one aliphatic diamine having 4 to 20 carbon atoms, and
(iv) at least one lactam and/or aminocarboxylic acid having 4 to 20 carbon atoms;
wherein the copolyamide has a melting point that is less than or equal to about 240 °C, at least about 30 µeq/g of amine ends, and an inherent viscosity of at least about 1.2 as measured in *m*-cresol.

2. The umbilical of claim 1, wherein repeat units (b) are derived from decanedioic acid and/or dodecanedioic acid, and hexamethylenediamine.

3. The umbilical of claim 1, wherein the aliphatic dicarboxylic acids of monomers (iii) are selected from one or more of nonanedioic acid, decanedioic acid, undecanedioic acid, dodecanedioic acid, tridecanedioic acid, and tetradecanedioic acid, and wherein the aliphatic diamine of (iii) is hexamethylenediame.

4. The umbilical of claim 1, wherein the lactam and/or aminocarboxylic acid is at least one of laurolactam, caprolactam, and 11-aminoundecanoic acid.

5. The umbilical of claim 1, wherein the copolyamide is present in about 80 to about 99 weight percent and further comprising about 1 to about 20 weight percent of a plasticizer, wherein the weight percentages are based on the total weight of the composition.

6. The umbilical of claim 5, wherein the plasticizer is a sulfonamide.

7. The umbilical of claim 5, wherein the plasticizer is one or more of *N-*butylbenzenesulfonamide, *N*-(2-hydroxypropyl)benzenesulfonamide, *N*-ethyl-o-toluenesulfonamide, *N*-ethyl-p-toluenesulfonamide, o-toluenesulfonamide, and *p-*toluenesulfonamide.

8. The umbilical of claim 1, wherein the polyamide composition further comprises one or more of thermal, oxidative, and/or light stabilizers; mold release agents; colorants; and lubricants.

9. The umbilical of claim 1, wherein the copolyamide has at least about 40 µq/g of amine ends.

10. The umbilical of claim 1, wherein the copolyamide has at least about 50 µeq/g of amine ends.

11. The umbilical of claim 1, wherein the copolyamide has at least about 60 µeq/g of amine ends.

12. The umbilical of Claim 1, wherein the copolyamide has a melting point of less than or equal to about 230 °C.

13. The umbilical of Claim 1, wherein the copolyamide has a melting point of less than or equal to about 220 °C

## Patentansprüche

1. Unterwasserversorgungsleitung, umfassend mindestens einen inneren Polyamidschlauch und eine äußere Hülle, die den mindestens einen inneren Polyamidschlauch umgibt, wobei der mindestens eine innere Polyamidschlauch eine Polyamidzusammensetzung umfasst, umfassend ein Copolyamid, umfassend:
(a) Wiederholungseinheiten, die von Monomeren abgeleitet sind, die aus einem oder mehreren aus der Gruppe ausgewählt sind bestehend aus:
(i) mindestens einer aromatischen Dicarbonsäure mit 8 bis 20 Kohlenstoffatomen und/oder mindestens einer alicyclischen Dicarbonsäure mit 8 bis 20 Kohlenstoffatomen und mindestens einem aliphatischen Diamin mit 4 bis 20 Kohlenstoffatomen, und
(ii) mindestens einem aromatischen Diamin mit 6 bis 20 Kohlenstoffatomen und/oder mindestens einem alicyclischen Diamin mit 6 bis 20 Kohlenstoffatomen und mindestens einer aliphatischen Dicarbonsäure mit 4 bis 20 Kohlenstoffatomen; und
(b) Wiederholungseinheiten, die von Monomeren abgeleitet sind, die aus einem oder mehreren aus der Gruppe ausgewählt sind bestehend aus:
(iii) mindestens einer aliphatischen Dicarbonsäure mit 6 bis 36 Kohlenstoffatomen und mindestens einem aliphatischen Diamin mit 4 bis 20 Kohlenstoffatomen, und
(iv) mindestens einem Lactam und/oder einer Aminocarbonsäure mit 4 bis 20 Kohlenstoffatomen;
wobei das Copolyamid einen Schmelzpunkt hat, der kleiner als oder gleich etwa 240°C ist, mindestens etwa 30 µeq/g von Amin-Enden, und eine inhärente Viskosität von 1,2 gemessen in m-cresol.

2. Versorgungsleitung nach Anspruch 1, wobei die Wiederholungseinheiten (b) von Decandisäure und/oder Dodecandisäure und Hexamethylendiamin abgeleitet sind.

3. Versorgungsleitung nach Anspruch 1, wobei die aliphatischen Dicarbonsäuren der Monomere (iii) ausgewählt sind aus einem oder mehreren von Nonandisäure, Decandisäure, Undecandisäure, Dodecandisäure, Tridecandisäure und Tetradecandisäurc, und wobei das aliphatische Diamin von (iii) Hexamethylendiamin ist.

4. Versorgungsleitung nach Anspruch 1, wobei das Lactam und/oder die Amincarbonsäure mindestens eins von Laurolactam, Caprolactam und 11-Aminoundecandisäure ist.

5. Versorgungsleitung nach Anspruch 1 wobei das Copolyamid in etwa 80 bis etwa 99 Ges.-% anwesend ist und ferner etwa 1 bis etwa 20 Ges.-% eines Weichmachers umfasst, wobei die Gewichtsprozente auf dem Gesamtgewicht der Zusammensetzung beruhen.

6. Versorgungsleitung nach Anspruch 5, wobei der Weichmacher ein Sulfonamid ist.

7. Versorgungsleitung nach Anspruch 5, wobei der Weichmacher einer oder mehrere von N-Butylbenzensulfonamid, N-(2-Hydroxypropyl)benzensulfonamid, N-Ethyl-o-toluensulfonamid, N-Ethyl-p-toluensulfonamid, o-Toluensulfonamid und p-Toluensulfonamid ist.

8. Versorgungsanleitung nach Anspruch 1, wobei die Polyamidzusammensetzung ferner einer oder mehrere von thermalen, oxidativen und/oder Lichtstabilisatoren; Entformungsmittel; Farbmittel; und Gleitmittel umfasst.

9. Versorgungsanleitung nach Anspruch 1, wobei das Copolyamid mindestens etwa 40 µeq/g von Amin-Enden aufweist.

10. Versorgungsanleitung nach Anspruch 1, wobei das Copolyamid mindestens etwa 50 µeq/g von Amin-Enden aufweist.

11. Versorgungsanleitung nach Anspruch 1, wobei das Copolyamid mindestens etwa 60 µeq/g von Amin-Enden aufweist.

12. Versorgungsanleitung nach Anspruch 1, wobei das Copolyamid einen Schmelzpunkt von weniger als oder gleich etwa 230°C aufweist.

13. Versorgungsanleitung nach Anspruch 1, wobei das Copolyamid einen Schmelzpunkt von weniger als oder gleich etwa 220°C aufweist.

## Revendications

1. Liaison ombilicale sous-marine comprenant au moins un tuyau interne en polyamide et un revêtement externe entourant le au moins un tuyau interne en polyamide, dans laquelle le au moins un tuyau interne en polyamide comprend une composition en polyamide comprenant un copolyamide comprenant :
(a) des unités de répétition dérivées de monomères sélectionnés d'un ou plusieurs groupe(s) constitué(s) de :
(i) au moins un acide dicarboxylique aromatique ayant de 8 à 20 atomes de carbone et/ou au moins un acide dicarboxylique alicyclique ayant de 8 à 20 atomes de carbone et au moins une diamine aliphatique ayant de 4 à 20 atomes de carbone, et
(ii) au moins une diamine aromatique ayant de 6 à 20 atomes de carbone et/ou au moins une diamine alicyclique ayant de 6 à 20 atomes de carbone et au moins un acide dicarboxylique aliphatique ayant de 4 à 20 atomes de carbone ; et
(b) des unités de répétition dérivées de monomères sélectionnés d'un ou plusieurs groupe(s) constitué(s) de :
(iii) au moins un acide dicarboxylique aliphatique ayant de 6 à 36 atomes de carbone et au moins une diamine aliphatique ayant de 4 à 20 atomes de carbone, et
(iv) au moins un lactame et/ou un acide aminocarboxylique ayant de 4 à 20 atomes de carbone ;
dans laquelle le copolyamide a un point de fusion inférieur ou égal à environ 240 °C, au moins 30 µeq/g d'extrémités amine, et un indice logarithmique de viscosité d'au moins environ 1,2 mesurée en m-cresol.

2. Liaison ombilicale selon la revendication 1, dans laquelle des unités de répétition (b) sont dérivées d'acide décanédioïque et/ou d'acide dodécanédioïque, et d'hexaméthylène diamine.

3. Liaison ombilicale selon la revendication 1, dans laquelle les acides dicarboxyliques aliphatiques des monomères (iii) sont sélectionnés à partir d'un ou plusieurs éléments parmi l'acide nonanédioïque, l'acide décanédioïque, l'acide undécanédioïque, l'acide dodécanédioïque, l'acide tridécanédioïque, et l'acide tétradécanédioïque, et dans laquelle la diamine aliphatique de (iii) est de l'hexaméthylène diamine.

4. Liaison ombilicale selon la revendication 1, dans laquelle le lactame et/ou l'acide aminocarboxylique est au moins un élément parmi le laurolactame, le caprolactame, et l'acide amino-11 undécanoïque.

5. Liaison ombilicale selon la revendication 1, dans laquelle le copolyamide est présent dans environ 80 à environ 99 pourcent en poids et comprenant en outre environ 1 à environ 20 pourcent en poids d'un plastifiant, où les pourcentages en poids sont basés sur le poids total de la composition.

6. Liaison ombilicale selon la revendication 5, dans laquelle le plastifiant est un sulfamide.

7. Liaison ombilicale selon la revendication 5, dans laquelle le plastifiant est un ou plusieurs N-butylbenzenesulfamide, N-(2-hydroxypropyl)benzenesulfamide, N-éthyl-o-toluènesulfamide, N-éthyl-p-toluènesulfamide, o-toluènesulfamide, et p-toluènesulfamide.

8. Liaison ombilicale selon la revendication 1, dans laquelle la composition polyamide comprend en outre un ou plusieurs stabilisant(s) thermique(s), oxydatif(s), et/ou photostabilisant(s) ; des agents de démoulage; des colorants ; et des lubrifiants.

9. Liaison ombilicale selon la revendication 1, dans laquelle le copolyamide a au moins 40 µeq/g d'extrémités amines.

10. Liaison ombilicale selon la revendication 1, dans laquelle le copolyamide a au moins 50 µeq/g d'extrémités amines.

11. Liaison ombilicale selon la revendication 1, dans laquelle le copolyamide a au moins 60 µeq/g d'extrémités amines.

12. Liaison ombilicale selon la revendication 1, dans laquelle le copolyamide a un point de fusion inférieur ou égal à environ 230 °C.

13. Liaison ombilicale selon la revendication 1, dans laquelle le copolyamide a un point de fusion inférieur ou égal à environ 220 °C.
